# EUROPEAN PATENT SPECIFICATION

(11) **EP 2 406 165 B1**
(45) Date of publication and mention of the grant of the patent: **26.08.2015**
(21) Application number: 10750410.2
(22) Date of filing: 11.03.2010
(51) Int. Cl.: B66B 7/06, B66B 15/02, B66D 3/26, F16B 21/16, B66D 3/04

(54) **DIVERTING PULLEY ARRANGEMENT AND ELEVATOR**
UMLEITUNGSRIEMENANORDNUNG UND AUFZUG DAMIT
AGENCEMENT DE POULIE DE DÉTOUR ET ÉLÉVATEUR

(30) Priority: 12.03.2009 FI 20090093
(43) Date of publication of application: 18.01.2012
(73) Proprietor: Kone Corporation, 00330 Helsinki (FI)
(72) Inventor: SAARELAINEN, Antti, FI-02650 Espoo (FI); VALJUS, Petteri, FI-00670 Helsinki (FI); KALLIOMÄKI, Jaakko, FI-01670 Vantaa (FI); NORJA, Jukka, FI-05810 Hyvinkää (FI); RAZVAN, Albu, FI-05860 Hyvinkää (FI)
(74) Representative: Graf Glück Kritzenberger
(86) International application number: PCT/FI2010/000019
(87) International publication number: WO 2010/103165

(56) References cited:
- WO-A1-2005/058740
- JP-A- 5 262 495
- JP-A- H05 262 495
- JP-A- H09 156 856
- JP-U- S5 946 973
- JP-U- 58 123 878
- JP-U- 59 170 572
- JP-U- S58 123 878
- US-A- 1 070 834

## Description

### FIELD OF THE INVENTION

The object of the invention is a diverting pulley arrangement as defined in the preamble of claim 1 and an elevator as defined in the preamble of claim 16.

### BACKGROUND OF THE INVENTION

In prior-art diverting pulleys the axle of the diverting pulley is locked into position with a locking plate that extends into a groove made in the axle. The groove is milled into the axle from the transverse direction, in which case the groove comprises a detent surface as viewed in the transverse direction of the axle, against which the locking plate is placed to lock the axle in position so that it does not rotate and does not move in the axial direction. A problem in these prior-art solutions is that when the locking plate breaks and allows the axle to rotate, movability of the axle is also enabled in the axial direction. Another problem in these prior-art solutions is that since the groove is milled in the solutions at a distance from the end of the axle, the detent surface that is against the locking plate has remained hidden behind the end of the axle. That being the case, it has not been possible to visually inspect the contact point of the locking plate and the detent surface of the axle. Inspecting this point is necessary so that, among other things, the condition of the locking plate can be determined and indirectly also the condition of the bearings. If servicing intervals are long, the condition of bearings can deteriorate over time so that the diverting pulley rotating on the axle starts essentially to try to rotate the axle. When the axle tries to rotate, the pressure exerted on the locking plate by the detent surface and also the wear resulting from to-and-fro loading increase. Verifying the condition of the locking plate has been laborious in prior art, because the diverting pulley structure has had to be opened for this purpose.

The JP S59 46973 U, the JP H05 262495 A as well as the US 1 070 834 A disclose a diverting pulley arrangement according to the preamble of claim 1.

### AIM OF THE INVENTION

The aim of the invention is to eliminate, among others, the aforementioned drawbacks of prior-art solutions. More particularly the aim of the invention is to produce a safe diverting pulley arrangement and elevator that are improved from the standpoint of maintenance. The aim of the invention is further to produce one or more of the following advantages, among others:
- A solution is achieved with which it can be ensured that failure of the locking of the axle of the diverting pulley does not result in the axle moving out of its position.
- A solution is achieved with which servicing procedures can be speeded up and made more efficient.
- A solution is achieved in which the condition and possible wearing of the locking plate of the diverting pulley are more quickly detected than earlier.
- A solution is achieved in which deterioration of the condition of the bearings of the diverting pulley is more quickly detected than earlier.
- A solution is achieved in which the condition of the diverting pulley can be visually observed better than earlier.

### SUMMARY OF THE INVENTION

The diverting pulley arrangement according to the invention is characterized by what is disclosed in the characterization part of claim 1. Preferred embodiments of the invention are characterized by what is disclosed in the dependent claims. Some inventive embodiments are also presented in the descriptive section and in the drawings of the present application. The inventive content may also consist of several separate inventions, especially if the invention is considered in the light of expressions or implicit sub-tasks or from the point of view of advantages or categories of advantages achieved. In this case, some of the attributes contained in the claims below may be superfluous from the point of view of separate inventive concepts. The features of the various embodiments can be applied within the framework of the basic inventive concept in conjunction with other embodiments.

According to the invention the diverting pulley arrangement, which is preferably a diverting pulley arrangement of a hoisting device, more particularly a diverting pulley arrangement of an elevator, comprises an axle, at least one diverting pulley that rotates while supported on the axle, a faceplate structure on the side of the diverting pulley, in relation to which and supported by which the diverting pulley is arranged to rotate, and locking means supported on the faceplate structure on the side of the diverting pulley for locking the axle so that it does not rotate in relation to the faceplate structure. The arrangement also comprises positioning means supported on the faceplate structure on the side of the diverting pulley for positioning the axle in relation to the faceplate structure at least in the axial direction (y). One advantage is that since the arrangement thus comprises separate locking means and positioning means, when the locking element fails the axle the axle remains in its position to rotate. Thus damaging of the locking element or rupture pin, et cetera, does not eliminate the support of the diverting pulley.

In one alternative of the invention the locking element is immovably fixed to the faceplate structure via at least one rupture pin. One advantage is that when the rolling resistance of the bearings grows too large, the rupture pin of the locking element fails and rotation of the diverting pulley can continue freely between the faceplates, in which case the rope guided onto the diverting pulley is not able to slip. In this way also shape deformation of the locking element can be limited, and the risks caused by shape deformation of the locking element can be avoided.

In the other alternative of the invention the locking element is fixed against the locking surface comprised in the axle to be immovable in relation to the faceplate structure in the axial direction (y) by compressing the locking element against the fixing base, such as against the faceplate structure or a part fixed to it, with fixing means, and there is room for movement between the locking element and the fixing means that allows movement of the locking element in the radial direction (x) at least for a certain distance when the friction locking produced by compression fails. Thus it is possible to avoid broken parts.

In one embodiment of the invention the positioning means for positioning the axle prevent the axle from moving in either axial direction (y).

In one embodiment of the invention the locking means comprise a locking element, which prevents rotation of the axle, and the positioning means comprise a second locking element, which prevents the axle from moving in either axial direction (y).

In one embodiment of the invention the locking element comprised in the locking means and/or the positioning means for positioning the axle prevent the axle from moving in the radial direction (x).

In one embodiment of the invention the locking element is placed against the locking surface comprised in the axle so that the contact point of the locking element and the locking surface of the axle is at least partly visible, preferably in particular when viewed from the direction of the end of the axle. In this way it is possible for the contact point C to be inspected from the direction of the end of the axle, and the locking detent does not need to be detached for this purpose.

In one embodiment of the invention the positioning means for positioning the axle in the axial direction (y) in relation to the faceplate structure comprise a second locking element that is immovable in relation to the faceplate structure and that extends into the positioning recess in the axle, which positioning recess is preferably a positioning groove passing around it, which second locking element is preferably a part fixed to the faceplate structure or an edge structure of the faceplate structure.

In one embodiment of the invention the locking means comprise a locking element, which is placed against the locking surface comprised in the axle so that it prevents rotation of the axle.

In one embodiment of the invention the diverting pulley is arranged to rotate on the first side of the faceplate structure, and the aforementioned locking means comprise a locking element supported on the second side of the faceplate structure immovably in relation to the faceplate structure, by the aid of which the axle is locked so that it does not rotate in relation to the faceplate structure.

In one embodiment of the invention the axle comprises a locking indent in its end that extends to the second side of the faceplate structure, into which locking indent the aforementioned locking element that remains stationary in relation to the faceplate structure 4 is placed to prevent rotation of the axle, and the locking indent opens both in the longitudinal direction (y) and in the transverse direction of the axle, and the locking surface of the indent, which faces in the transverse direction (x) of the axle, forms a detent surface for the locking element to prevent rotation of the axle.

In one embodiment of the invention the contact point of the locking surface and of the locking element being against each other is at least partly visible, preferably for its whole length, when viewed from the direction of the second end of the axle, more particularly without the parts of the axle impairing the visibility of the contact point.

In one embodiment of the invention the locking element and the second locking element are separate parts.

In one embodiment of the invention the locking element is a plate, the extensive surface of which is essentially flush with the end surface of the second end of the axle. Thus visual inspectability is good.

In one embodiment of the invention the positioning means comprise a second locking element that is immovable in relation to the faceplate structure, which second locking element is forked and comprises prongs that extend to the opposite sides of the axle, each of which prongs extends into the positioning recess of the axle and prevents the axle for moving in either axial direction (y). Thus the construction is simple and reliable.

In one embodiment of the invention the locking element comprises at least one, preferably two of the type of elongated apertures, via which the locking element is tightened with a moving bolt or corresponding in the axial direction (y) against a fixing base, such as against a faceplate structure or a part fixed to it, which aperture allows the locking element to move in the radial direction (x) at least a certain distance without being prevented by the aforementioned bolt or corresponding. Thus the desired distance can be set and the direction of movability of the parts limited.

In one embodiment of the invention after the locking element has moved a certain distance, the locking element allows rotation of the axle. Thus a diverting pulley that is stuck to its axle can start to rotate without breaking any pieces.

In one embodiment of the invention the locking element is directly or indirectly immovably fixed to the faceplate structure via a rupture pin and a bolt, the breaking threshold of which rupture pin is lower than that of the bolt. Thus the locking element remains in its position after a rupture.

In one embodiment of the invention when the rupture pin breaks, the locking element is arranged to bend away from its position against the locking surface around the fulcrum of the axial direction (y) formed at the point of the bolt. Thus the locking element moves out of the path of rotation and nevertheless remains in position to indicate failure of the locking.

In one embodiment of the invention the distance of the rupture pin from the fulcrum formed at the point of the bolt is smaller than the distance between the fulcrum and the most distant point of the contact point from the fulcrum. In this way, the dependency on the direction of rotation can be reduced.

According to the invention, the elevator, which is preferably a passenger elevator, comprises an elevator car, roping, which moves when the elevator is operated, such as e.g. hoisting roping and or compensating roping, and a diverting pulley arrangement, which diverting pulley arrangement comprises at least one diverting pulley arranged to rotate in the elevator hoistway and/or on the elevator car and/or on the counterweight, which diverting pulley is arranged to guide the passage of at least one rope or corresponding comprised in the aforesaid roping. The diverting pulley arrangement is any of the types defined above. In this way an elevator is achieved that has the advantages specified above.

According to the invention, in the method for determining the condition of a bearing comprised in a diverting pulley arrangement, preferably a diverting pulley arrangement of an elevator, the condition of the bearing is determined on the basis of the condition of the locking element, which locking element locks the axle so that it does not rotate in relation to the faceplate structure of the diverting pulley arrangement. The method is advantageous for the reason, among others, that the condition of the bearings can be determined also during normal operation from a moving diverting pulley, preferably e.g. from the diverting pulley of the counterweight. The diverting pulley arrangement is in this case such that that the locking element is placed against the locking surface comprised in the axle so that the contact point of the locking element and the locking surface of the axle is at least partly visible, preferably particularly when viewed from the direction of the end of the axle. Preferably the diverting pulley arrangement is any of the types described above.

In one embodiment of the method according to the invention the condition of the bearing is determined by inspecting the contact point of the locking surface of the axle and the locking element that are against each other, e.g. visually or with a feeler gauge, from the direction of the second end of the axle for shape deformations that have occurred in the locking surface and/or in the detent surface of the locking element.

On the other hand the invention could be defined otherwise than what is presented above. According to the second definition method, the diverting pulley arrangement, which is more particularly a diverting pulley arrangement of an elevator, comprises an axle, at least one diverting pulley that rotates while supported on the axle, a faceplate structure, in relation to which and supported by which the diverting pulley is arranged to rotate on the first side of the faceplate structure, which axle is locked so that it does not rotate in relation to the faceplate structure by the aid of a locking element, which locking element is on the second side of the faceplate structure and supported so that it does not move in relation to the faceplate structure. The locking element is placed against the locking surface comprised in the axle so that the contact point of the locking element and the locking surface of the axle is at least partly visible, preferably particularly when viewed from the direction of the end of the axle. In this way it is possible for the contact point C to be inspected from the direction of the end of the axle, and the locking detent does not need to be detached for this purpose. The additional features, and combinations thereof, presented of the embodiments above and of each claim can be combined with this diverting pulley arrangement.

### LIST OF FIGURES

In the following, the invention will be described in detail by the aid of some embodiments with reference to the attached drawings, wherein
Fig. 1 presents a three-dimensional view of one diverting pulley arrangement according to one embodiment of the invention.
Fig. 2 presents an axle according to one embodiment of the invention for use in a diverting pulley arrangement of the invention.
Fig. 3a presents an explosion drawing of the parts used in a diverting pulley arrangement according to one embodiment of the invention.
Fig. 3b presents an assembly drawing of the parts of Fig. 3a as a cross-sectional view.
Fig. 4 presents an axle according to one embodiment of the invention for use in a diverting pulley arrangement of the invention.
Fig. 5a presents an explosion drawing of the parts used in a diverting pulley arrangement according to one embodiment of the invention.
Fig. 5b presents a cross-sectional view of an assembly drawing of the parts of Fig. 5a.
Fig. 6a presents a method according to one embodiment of the invention for positioning and locking an axle.
Fig. 6b presents the situation of the embodiment according to Fig. 6a, wherein the friction locking has failed.
Fig. 7a presents a method according to one embodiment of the invention for positioning and locking an axle.
Fig. 7b the situation of the embodiment according to Fig. 7a, wherein the rupture pin has snapped.
Fig. 8 presents a B-B and C-C section of Figs. 6a and 7a.

### DETAILED DESCRIPTION OF THE INVENTION

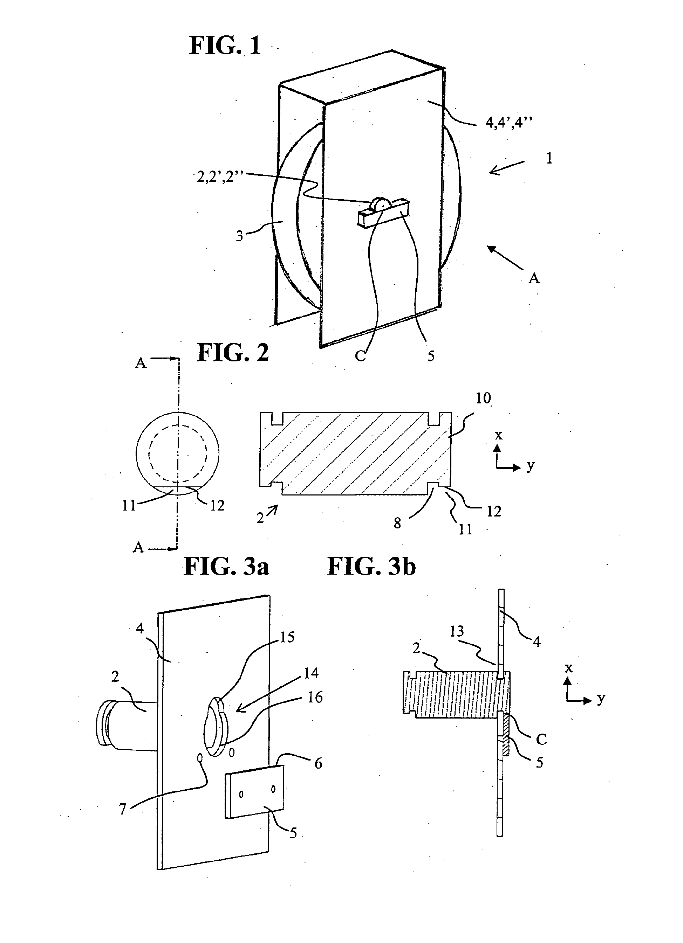

Fig. 1 presents in principle an assembly drawing of one diverting pulley arrangement 1 according to the invention, which comprises an axle 2,2',2", at least one diverting pulley 3 that rotates preferably around the axle while supported on the axle, a faceplate structure 4,4',4" on the side of the diverting pulley, which faceplate structure preferably comprises at least one faceplate, in relation to which and supported by which faceplate structure the diverting pulley 3 is arranged to rotate supported on the axle 2,2',2" on the first side of the faceplate structure. The axle 2,2',2" is locked so that it does not rotate in relation to the faceplate structure by the aid of a locking element 5, which locking element 5 is on the second side of the faceplate structure 4,4',4", which second side is on the opposite side to the first side and supported so that it does not move in relation to the faceplate structure 4,4',4". The locking element 5 is placed against the detent surface 6 of the axle 2 so that the contact point C of the locking element 5 and the detent surface of the axle is at least partly visible, preferably however visible for its whole length, when viewed from the direction of the end of the axle. This is brought about by shaping/arranging the parts of the arrangement so that the parts of the axle 2,2',2' do not impair the visibility of the contact point C in the direction of the end 10 of the axle. The locking element 5 is fixed immovably to the faceplate structure 4,4',4" via rupture pins 7. The locking element 5 is preferably a plate, the surface of which is essentially flush with the end surface of the axle 2,2',2". Thus the contact point C is easily visible when viewed from the direction A of the end of the axle, because the edge side on the side of the second end of the axle of the surface of the locking element 5 that is against the axle 2,2',2" is very visible. Likewise the edge side on the side of the second end of the axle of the surface of the detent surface 6 of the second end of the axle that is against the locking element 5 is very visible. The diverting pulley arrangement preferably, but not necessarily, comprises a bearing between the axle and the diverting pulley. If the bearing starts to fail, the axle starts to beat against the locking element and wear of the bearing is visible first as burnishing and then as flattening of the detent surfaces. The arrangement also comprises positioning means (8,13,17,18) supported on the faceplate structure (4,4',4") on the side of the diverting pulley 3 for positioning the axle 2,2',2" in relation to the faceplate structure (4,4',4") at least in the axial direction (y). These means are presented in connection with the embodiments.

Figs. 2-3b present one embodiment in the implementation of the arrangement of Fig. 1. Fig. 2 presents on the left an axle 2 viewed from the direction A, and also on the right a cross-sectional drawing (section A-A). Figs. 2 and 3a present an explosion drawing of the parts used in a diverting pulley arrangement according to one embodiment of the invention. Fig. 3b presents an assembly drawing of the parts of Fig. 3a as a cross-sectional view. The axle 2 comprises a locking indent in its end 10 that extends to the second side of the faceplate structure 4, into which locking indent the aforementioned locking element 5 that remains stationary in relation to the faceplate 4 is intended to be placed to prevent rotation of the axle 2. The locking indent 11 opens both in the longitudinal direction x and in the transverse direction y of the axle, and the surface 12 of the indent 11, which faces in the transverse direction x of the axle 2, forms a detent surface used for locking for the locking element to prevent rotation of the axle 2. The axle 2 comprises a positioning recess 8 for positioning the axle 2 in relation to the faceplate 4 in the axial direction y, such as e.g. a positioning groove 8 passing around the axle, into which positioning groove the edge structure 13 of the aperture 14 extends. The locking element 5 is fixed to the faceplate structure 4 with fixing means 7, which are illustrated in simplified form in the drawings, and which fixing means preferably comprise at least one rupture pin. The diverting pulley arrangement can be supported in its installation position e.g. via the faceplate structure 4.

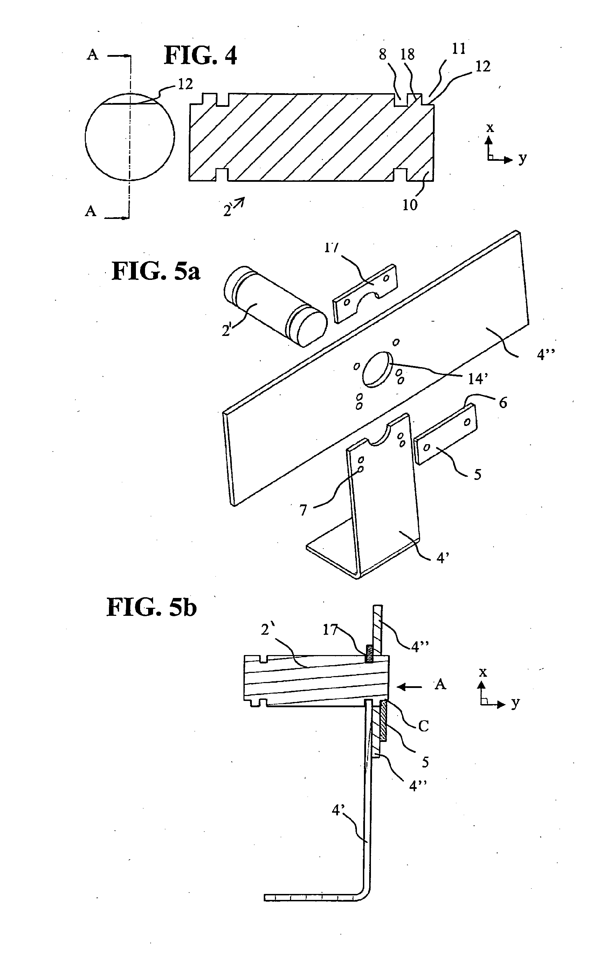

Figs. 4-5b present a second embodiment in the implementation of the arrangement of Fig. 1. Fig. 4 presents the axle 2' and Fig. 5a presents an explosion drawing of the parts used in a diverting pulley arrangement according to this embodiment (not all parts are shown). Fig. 3b presents an assembly drawing of the parts of Fig. 3a as a cross-sectional view. The axle 2' comprises a locking indent in its end 10 that extends to the second side of the faceplate structure 4',4", into which locking indent the aforementioned locking element 5 that remains stationary in relation to the faceplate 4 is intended to be placed to prevent rotation of the axle 2'. The locking indent 11 opens both in the longitudinal direction y and in the transverse direction x of the axle, and the surface 12 of the indent 11, which faces in the transverse direction x of the axle 2, forms a detent surface used for locking for the locking element to prevent rotation of the axle 2'. The axle 2' comprises a positioning recess 8 for positioning the axle 2' in relation to the faceplate structure 4',4" in the axial direction x, such as e.g. a positioning groove 8 passing around the axle. The locking surface 12 placed against the locking element 5 is separate from the positioning recess 8, separated by the neck 18. The arrangement comprises separate means 17 from the locking means 11,12,5 that prevent rotation for positioning the axle 2' in the axial direction. That being the case when the locking element 5 wears and possibly when it detaches, the axle starts to rotate supported on the faceplate positioned by different positioning elements, which improves the safety of the arrangement. The positioning means 8,17 and the locking means 5,11 are thus separate from each other and can form a separate invention that is independent of the rest of the construction of the diverting pulley arrangement. The faceplate structure comprises a first faceplate 4" and a second faceplate 4', which are fixed to each other with fixing means 7. A locking element 5 and a second locking element 17 are fixed to the faceplate structure 4',4" with fixing means 7, the illustrations of which are simplified in the drawings. The locking element is fixed to the faceplate 4" with fixing means, which comprise preferably at least one rupture pin. The diverting pulley arrangement can be supported in its installation position e.g. via the faceplate 4'. The faceplate structure (4',4") comprises an aperture 14', through which the end 10 of the axle 2,2' extends to the second side of the faceplate structure (4',4"), and the faceplate structure (4',4") extends into the positioning groove 8 of the axle 2'. The aperture 14' is formed to comprise a more extensive section 16, from which the axle 2 can be pushed through, and a narrower section 15, to the point of which the axle 2 pushed through from the aperture 14' can be moved in the direction of the plane of rotation of the axle from the point of the more extensive aperture 16, and when the axle 2 is at the point of the narrower section 15 the faceplate structure (4',4") extends (in the radial direction) into the positioning recess 8 and prevents movement of the axle 2 in the axial direction y. When the axle 2' is positioned by means of the locking groove 8, the second locking element 17 prevents the axle (2,2') from moving in the radial direction of the axle out of the position that is positioned by means of the locking groove 8.

Generally speaking, the indent 11 opens in the transverse direction x and in the axial, i.e. longitudinal, direction y, as presented above. The indent in this case comprises a surface 12 that faces essentially in the transverse direction x, but preferably the surface 12 faces directly in the transverse direction x when the direction x is at a right angle to the longitudinal direction of the axle, which is the direction of the rotational axis of the axle. The indent opens in addition to this in the longitudinal direction y, preferably but not necessarily for its whole length. The locking surface 12 of the indent that opens in the longitudinal direction y faces most preferably in the transverse direction x, in which case formation of support forces in the axial direction is avoided, but the locking surface 12 could alternatively also be slightly inclined in the direction of the end 10. With these arrangements, since the indent opens in the direction y, when placing the locking element in the indent the contact point C of the locking element and the locking surface 12 is visible from the direction A of the end 10 of the axle 2,2' without the parts of the axle 2 blocking visibility.

The locking surface 12 of the indent 11 is preferably flat and parallel with the surface of the faceplate 5, which surface forms a detent surface for the locking surface 12. The locking element is preferably a plate, preferably a rectangular polyhedron, one straight edge side of which forms a surface to be placed against the detent surface of the axle. The indent 11 extends preferably from flush with the end of the axle 3-10 mm, most preferably 3-7 mm, in the longitudinal direction. The indent that is in the end 10 and that opens towards the longitudinal direction is preferably a cavity, which is preferably round in its cross-sectional shape, milled in the axle. There can be a plurality of diverting pulleys supported on the axle, in which case the diverting pulleys of the diverting pulley plurality can each have separate bearings or can have a common bearing.

The contact point C between the axle and the locking element can be arranged to remain visible in other ways than by making an indent that opens in the longitudinal and transverse directions of the axle. The end of the axle can e.g. be formed to comprise a projection that protrudes from the axle in its radial direction, which projection comprises a detent surface facing in essentially the tangential transverse direction of the axle, against which surface the locking element can be placed.

The rope attempts to rotate the diverting pulley with the frictional force F• between them. When the condition of the bearings is weak, the force from movement of the rope is transmitted to the locking element 5. The rupture pin is preferably dimensioned to break before slipping between the diverting pulley and the rope guided by the diverting pulley starts to occur. Preferably the rupture pin is dimensioned to break when the rope exerts on the diverting pulley 40-60%, more preferably approx. 50%, of the force at which slipping would start. In this way shape deformation of the locking element 5 can be limited, and the risks caused by shape deformation of the locking element can be avoided. The fixing means 7 in the figures are preferably normal fixing means in the other parts of the diverting pulley, and only the fixing means 7 of the locking element comprise a rupture pin/rupture pins.

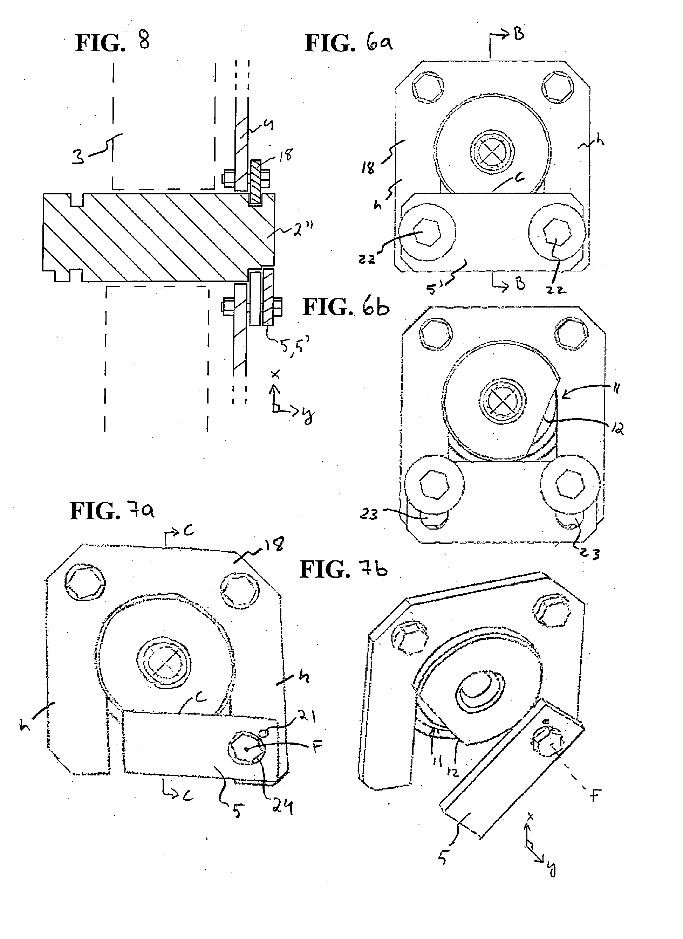

The embodiments of the invention presented in Figs. 6a-8, in which the axle is locked with locking means so that it does not rotate and which arrangement additionally comprises positioning means (8,18) supported on the faceplate structure 4 on the side of the diverting pulley 3 for positioning the axle 2" in relation to the faceplate structure (4,4',4") in the axial direction (y), which means prevent the axle 2" from moving in either axial direction (y). As in the preceding embodiments, in these also the positioning means and the locking means are supported on the faceplate structure on the same side of the diverting pulley. The locking elements can be fixed directly, or via another part, to the faceplate structure. The positioning means (8,18) of the arrangement comprise a second locking element 18 that is immovable in relation to the faceplate structure 4, which second locking element is forked and comprises prongs h that extend to the opposite sides of the axle 2", each of which prongs extends into the positioning recess 8 and prevents the axle 2" from moving in either axial direction (y). The locking principle of the axle 2" so that it does not rotate corresponds in these embodiments to the earlier embodiments. The difference is only the fixing method of the locking element 5,5'.

In the embodiment of Figs. 6a and 6b, the locking element 5' is fixed against the locking surface 12 comprised in the axle 2" to be immovable in relation to the faceplate structure in the axial direction (y) by compressing the locking element 5' against a part 18 fixed to the faceplate structure 4 with fixing means. There is room for movement between the locking element 5' and the fixing means that allows movement of the locking element in the radial direction (x) at least for a certain distance when the friction locking produced by compression fails. This is made possible because the locking element 5' comprises two of the type of elongated apertures 23, via which the locking element 5' is tightened with a moving bolt 22 or corresponding in the axial direction (y) against a fixing base, which aperture 23 allows the locking element 5' to move in the radial direction (x) at least a certain distance without being prevented by the aforementioned bolt 22 or corresponding. After the locking element 5' has moved a certain distance, the locking element 5' allows rotation of the axle 2" This situation is presented in Fig. 6b.

In the embodiment presented in Figs. 7a and 7b, the locking element 5 is directly or indirectly immovably fixed to the faceplate structure 4 via a rupture pin 21 and a bolt 24, the breaking threshold of which rupture pin 21 is lower than that of the bolt 24. When the rupture pin 21 breaks, the locking element 5 is arranged to bend away from its position against the locking surface 12 around the fulcrum F of the axial direction (y) formed at the point of the bolt 24. The distance of the rupture pin 21 from the fulcrum F formed at the point of the bolt 24 is smaller than the distance d between the fulcrum F and the most distant point of the contact point C from the fulcrum F. Thus the arrangement behaves less dependently on the direction of rotation. The effect of the direction of rotation of the axle required for breaking is less than before.

In the method according to the invention for determining the condition of a bearing comprised in a diverting pulley arrangement of an elevator, e.g. a passenger elevator, the condition of the bearing is determined on the basis of the condition of the locking element 5, which locking element 5 locks the axle 2,2',2" so that it does not rotate in relation to the faceplate structure (4,4'4") of the diverting pulley arrangement 1. The condition of the bearing is determined by inspecting from the direction A of the second end of the axle 2,2',2" for any shape deformations that have occurred in the locking surface 12 and/or in the detent surface 6 of the locking element in the contact point C of the locking surface 12 and the locking element 5 that are against each other. In the method the elevator and/or diverting pulley arrangement 1 is preferably presented somewhere else in this application, e.g. in Figs. 1-5b. If shape deformations are detected, a need to replace the bearing of the axle is diagnosed. More particularly, if the clearance between the surface 6 and the surface 12 has increased, it is a sign of bearing damage. The method is advantageous for the reason, among others, that the condition of the bearings can be determined also during normal operation from a moving diverting pulley, e.g. from the diverting pulley of the counterweight. Determining the bearing condition on e.g. the aural principle would be impossible.

For the sake of clarity, the bearing is not presented in the drawings, nor is the diverting pulley 3 in all the drawings. The bearing is preferably any prior-art bearing, in which case the bearing, e.g. ball bearings, is around the axle 2,2',2" and the diverting pulley structure 3 is on the rim of the bearing. The bearing can be on the axle in a fixed or rotating manner, however preferably so that it enables rotation between the axle 2,2',2" and the diverting pulley 3.

The elevator according to the invention is an elevator, e.g. an elevator applicable to passenger traffic, that comprises an elevator car, roping, which moves when the elevator is operated, such as e.g. hoisting roping and or compensating roping, and a diverting pulley arrangement 1, which diverting pulley arrangement 1 comprises at least one diverting pulley 3 arranged to rotate in the elevator hoistway and/or on the elevator car and/or on the counterweight, which diverting pulley is arranged to guide the passage of at least one rope or corresponding comprised in the aforesaid roping. The diverting pulley arrangement is according to any of claims 1-10.

It is obvious to the person skilled in the art that the invention is not limited to the embodiments described above, in which the invention is described using examples, but that many adaptations and different embodiments of the invention are possible within the frameworks of the inventive concept defined by the claims presented below. Thus, for example, it is obvious that although the structure of only one end of the axle is described above, it is clear that both ends of the axle can comprise functions and/or structures that are similar to those described above. Likewise, the faceplate structure can be similar in its functions and/or structures on both sides of the diverting pulley/diverting pulley plurality supported by the axle.

## Claims

1. Diverting pulley arrangement (1), more particularly a diverting pulley arrangement of an elevator, which arrangement comprises
- an axle (2,2',2"),
- at least one diverting pulley (3) that rotates while supported on the axle (2,2',2"),
- a faceplate structure (4,4',4") on the side of the diverting pulley (3), in relation to which and supported by which the diverting pulley (3) is arranged to rotate,
- locking means (5,5',11,12) supported on the faceplate structure (4,4',4") on the side of the diverting pulley for locking the axle so that it does not rotate in relation to the faceplate structure (4,4',4"), which arrangement also comprises positioning means (8,13,17,18) supported on the faceplate structure (4,4',4") on the side of the diverting pulley (3) for positioning the axle (2,2') in relation to the faceplate structure (4,4',4") at least in the axial direction (y), **characterized in**
- **that** the locking element (5,5') is fixed immovably to the faceplate structure (4,4',4") via at least one rupture pin (21)
or
- **that** the locking element (5') is fixed against the locking surface (12) comprised in the axle (2,2',2") to be immovable in relation to the faceplate structure in the axial direction (y) by compressing the locking element against the fixing base, such as the faceplate structure (4,4',4") or a part (18) fixed to it, with fixing means and in that there is room for movement between the locking element (5') and the fixing means that allows movement of the locking element in the radial direction (x) at least for a certain distance when the friction locking produced by compression fails.

2. Diverting pulley arrangement (1) according to claim 1, **characterized in that** the positioning means (8,13,17,18) for positioning the axle (2,2') prevent the axle (2) from moving in either axial direction (y).

3. Diverting pulley arrangement (1) according to any of the preceding claims, **characterized in that** the locking means comprise a locking element (5,5'), which prevents rotation of the axle (2,2',2"), and the positioning means comprise a second locking element (13,17,18), which prevents the axle from moving in either axial direction (y).

4. Diverting pulley arrangement (1) according to any of the preceding claims, **characterized in that** the locking element (5,5') comprised in the locking means (5,5',11,12) and/or the positioning means (8,13,17,18) for positioning the axle (2,2',2") also prevent the axle (2) from moving in the radial direction (x).

5. Diverting pulley arrangement (1) according to any of the preceding claims, **characterized in that** the locking element (5,5') is placed against the locking surface (12) comprised in the axle (2,2',2") so that the contact point (C) of the locking element and the locking surface (12) of the axle is at least partly visible.

6. Diverting pulley according to any of the preceding claims, **characterized in that** the positioning means (8,13,17,18) for positioning the axle (2,2',2") in the axial direction (y) in relation to the faceplate structure (4,4',4") comprise a second locking element (13,17,18) that is immovable in relation to the faceplate structure (4,4',4") and that extends into the positioning recess (8) in the axle (2,2',2"), which positioning recess is preferably a positioning groove (8) passing around it, which second locking element is preferably a part fixed to the faceplate structure (4,4',4") or an edge structure of the faceplate structure (4,4',4").

7. Diverting pulley arrangement according to any of the preceding claims, **characterized in that** the locking means comprise a locking element (5,5'), which is placed against the locking surface (12) comprised in the axle (2,2',2") so that it prevents rotation of the axle (2,2',2").

8. Diverting pulley arrangement (1) according to any of the preceding claims, **characterized in that** the diverting pulley (3) is arranged to rotate on the first side of the faceplate structure (4,4',4"), and **in that** the aforementioned locking means (5,5',11,12) comprise a locking element (5,5') supported on the second side of the faceplate structure (4,4',4") immovably in relation to the faceplate structure (4,4',4"), by the aid of which the axle (2,2',2") is locked so that it does not rotate in relation to the faceplate structure (4,4',4").

9. Diverting pulley arrangement (1) according to any of the preceding claims, **characterized in that** the axle (2,2',2") comprises a locking indent (11) in its end (10) that extends to the second side of the faceplate structure (4,4',4"), into which locking indent (11) the aforementioned locking element (5,5') that remains stationary in relation to the faceplate structure (4,4',4") is placed to prevent rotation of the axle (2,2',2"), and **in that** the locking indent (11) opens both in the longitudinal direction (y) and in the transverse direction (x) of the axle (2), and **in that** the locking surface (12) of the indent (11), which faces in the transverse direction (x) of the axle (2,2'), forms a detent surface for the locking element (5,5') to prevent rotation of the axle (2,2',2").

10. Diverting pulley arrangement according to any of the preceding claims, **characterized in that** the locking element (5,5') and the second locking element (13,17,18) are different parts.

11. Diverting pulley arrangement according to any of the preceding claims, **characterized in that** the diverting pulley arrangement (1) comprises a bearing between the axle (2,2',2") and the diverting pulley (3).

12. Diverting pulley arrangement according to any of the preceding claims, **characterized in that** the faceplate structure (4,4',4") comprises an aperture (14) through which the end (10) of the axle (2,2',2") extends to the second side of the faceplate structure (4,4',4"), and **in that** the edge structure (13) of the aperture (14) and/or the second locking element (17,18) extends into the positioning groove (8) of the axle (2,2',2"), for preventing movement of the axle in the y direction and/or the x direction, preferably at least in the y direction,

13. Diverting pulley arrangement according to any of the preceding claims, **characterized in that** the aperture (14) comprised in the faceplate structure is formed to comprise a more extensive section (16), from which the axle (2,2',2") can be pushed through, and a narrower section (15), to the point of which the axle (2,2',2") pushed through from the aperture (14) can be moved in the direction of the plane of rotation of the axle from the point of the more extensive aperture (16), and when the axle (2,2',2") is at the point of the narrower section (15) the faceplate structure (4,4',4") extends into the positioning recess (8) of the axle (2) and prevents movement of the axle (2) in the axial direction (y).

14. Diverting pulley arrangement according to any of the preceding claims, **characterized in that** the locking element (5) is directly or indirectly immovably fixed to the faceplate structure (4,4',4") via a rupture pin (21) and a bolt (24), the rupture threshold of which rupture pin (21) is lower than that of the bolt (24).

15. Diverting pulley arrangement according to any of the preceding claims, **characterized in that** when the rupture pin (21) breaks, the locking element (5) is arranged to bend away from its position against the locking surface (12) around the fulcrum (F) of the axial direction (y) formed at the point of the bolt (24).

16. Elevator, more particularly a passenger elevator, which comprises an elevator car, roping, which moves when the elevator is operated, such as e.g. hoisting roping and or compensating roping, and a diverting pulley arrangement (1), which diverting pulley arrangement (1) comprises at least one diverting pulley (3) arranged to rotate in the elevator hoistway and/or on the elevator car and/or on the counterweight, which diverting pulley is arranged to guide the passage of at least one rope or corresponding comprised in the aforesaid roping, **characterized in that** the diverting pulley arrangement is according to any of claims 1-10.

## Patentansprüche

1. Umlenkrollenanordnung (1), insbesondere eine Umlenkrollenanordnung eines Aufzugs, welche Anordnung folgende Merkmale enthält:
- eine Achse (2, 2',2"),
- wenigstens eine Umlenkrolle (3), die rotiert, während sie auf der Achse (2,2',2") getragen wird,
- eine Frontplattenstruktur (4, 4', 4") an der Seite der Umlenkrolle (3), relativ zu welcher sich die Umlenkrolle (3) dreht und an welcher diese gelagert ist,
- Verriegelungsmittel (5, 5', 11, 12), die an der Frontplattenstruktur (4, 4', 4") an der Seite der Umlenkrolle getragen sind, um die Achse zu sperren, so dass diese nicht relativ zur Frontplattenstruktur (4, 4', 4") rotiert, welche Anordnung auch eine Positioniereinrichtung (8, 13, 17, 18) aufweist, die an der Frontplattenstruktur (4, 4', 4") an der Seite der Umlenkrolle (3) getragen ist, um die Achse (2, 2') relativ zur Frontplattenstruktur (4, 4', 4") zumindest in axialer Richtung (y) zu positionieren, **dadurch gekennzeichnet,**
- **dass** das Verriegelungselement (5, 5') unbewegbar an der Frontplattenstruktur (4, 4', 4") mittels mindestens eines Reißbolzens (21) fixiert ist, oder
- **dass** das Verriegelungselement (5') gegen die in der Achse (2, 2', 2") enthaltene Verriegelungsfläche (12) mit Befestigungsmitteln fixiert ist, so dass sie in axialer Richtung (y) unbeweglich relativ zur Frontplattenstruktur ist, indem das Verriegelungselement gegen die Befestigungsbasis, wie z.B. die Frontplattenstruktur (4, 4', 4") oder ein damit verbundenes Teil (18) gepresst wird, und dass ein Raum für eine Bewegung zwischen dem Verriegelungselement (5') und den Befestigungsmitteln vorgesehen ist, der eine Bewegung des Verriegelungselements in der radialen Richtung (x) zumindest über eine gewisse Distanz erlaubt, wenn die durch die Kompression erzeugte Friktionsverriegelung wegfallen sollte.

2. Umlenkrollenanordnung (1) nach Anspruch 1, **dadurch gekennzeichnet, dass** die Positioniereinrichtung (8, 13, 17, 18) zum Positionieren der Achse (2, 2') die Achse (2) davon abhält, sich in beide axialen Richtungen (y) zu bewegen.

3. Umlenkrollenanordnung (1) nach einem der vorhergehenden Ansprüche, **dadurch gekennzeichnet, dass** die Verriegelungsmittel ein Verriegelungselement (5, 5') enthalten, welches die Rotation der Achse (2, 2', 2") verhindert, und dass die Positioniereinrichtung ein zweites Verriegelungselement (13, 17, 18) enthält, welches die Achse davon abhält, sich in beide axialen Richtungen (y) zu bewegen.

4. Umlenkrollenanordnung (1) nach einem der vorhergehenden Ansprüche, **dadurch gekennzeichnet, dass** das welches in den Verriegelungsmitteln (5, 5',11, 12) enthaltene Verriegelungselement (5, 5') und/oder die Positioniereinrichtung (8, 13, 17, 18) zum Positionieren der Achse (2, 2', 2") auch die Achse (2) davon abhält, sich in radialer Richtung (x) zu bewegen.

5. Umlenkrollenanordnung (1) nach einem der vorhergehenden Ansprüche, **dadurch gekennzeichnet, dass** das Verriegelungselement (5, 5') gegen die in der Achse (2, 2',2") enthaltene Verriegelungsfläche (12) anliegt, so dass der Kontaktpunkt (C) des Verriegelungselements und der Verriegelungsfläche (12) der Achse zumindest teilweise sichtbar ist.

6. Umlenkrollenanordnung nach einem der vorhergehenden Ansprüche, **dadurch gekennzeichnet, dass** die Positioniereinrichtung (8, 13, 17, 18) zum Positionieren der Achse (2, 2', 2") in axialer Richtung (y) relativ zur Frontplattenstruktur (4, 4', 4") ein zweites Verriegelungselement (13, 17, 18) enthält, das relativ zur Frontplattenstruktur (4, 4', 4") unbeweglich ist und welches sich in die in der Achse (2, 2', 2") ausgebildete Positioniervertiefung (8) erstreckt, welche Positioniemertiefung vorzugsweise eine sich darum erstreckende Positioniernut (8) ist, welches zweite Verriegelungselement vorzugsweise ein an der Frontplattenstruktur (4, 4', 4") befestigtes Teil ist oder eine Kantenstruktur der Frontplattenstruktur (4, 4', 4").

7. Umlenkrollenanordnung nach einem der vorhergehenden Ansprüche, **dadurch gekennzeichnet, dass** die Verriegelungsmittel ein Verriegelungselement (5, 5') enthalten, welches gegen die in der Achse (2, 2', 2") enthaltene Verriegelungsfläche (12) anliegt, so dass es eine Rotation der Achse (2, 2', 2") verhindert.

8. Umlenkrollenanordnung (1) nach einem der vorhergehenden Ansprüche, **dadurch gekennzeichnet, dass** die Umlenkrolle (3) angeordnet ist, um an der ersten Seite der Frontplattenstruktur (4, 4', 4") zu rotieren, und dass die vorgenannten Verriegelungsmittel (5, 5', 11, 12) ein Verriegelungselement (5, 5') enthalten, welches auf der zweiten Seite der Frontplattenstruktur (4, 4', 4") unbeweglich relativ zur Frontplattenstruktur (4, 4', 4") gehalten ist, mit dessen Hilfe die Achse (2, 2', 2") verriegelt ist, so dass sie nicht relativ zur Frontplattenstruktur (4, 4', 4") rotiert.

9. Umlenkrollenanordnung (1) nach einem der vorhergehenden Ansprüche, **dadurch gekennzeichnet, dass** die Achse (2, 2', 2") eine Verriegelungsvertiefung (11) in ihrem Ende (10) enthält, welches sich zur zweiten Seite der Frontplattenstruktur (4, 4', 4") erstreckt, in welcher Verriegelungsvertiefung (11) das stationär in Relation zur Frontplattenstruktur (4, 4', 4") verbleibende Verriegelungselement (5, 5',) angeordnet ist, um die Rotation der Achse (2, 2', 2") zu verhindern, und dass die Verriegelungsvertiefung (11) sowohl in Längsrichtung (y) als auch in der Querrichtung (x) der Achse (2) öffnet, und dass die Verriegelungsfläche (12) der Vertiefung (11), die in der Querrichtung (x) der Achse (2, 2') gegenüberliegt, eine Sperrfläche für das Verriegelungselement (5, 5') bildet, um eine Rotation der Achse (2, 2', 2") zu verhindern.

10. Umlenkrollenanordnung nach einem der vorhergehenden Ansprüche, **dadurch gekennzeichnet, dass** das Verriegelungselement (5, 5') und das zweite Verrieglungselement (13, 17, 18) unterschiedliche Teile sind.

11. Umlenkrollenanordnung nach einem der vorhergehenden Ansprüche, **dadurch gekennzeichnet, dass** die Umlenkrolleneinrichtung (1) ein Lager zwischen der Achse (2, 2', 2") und der Umlenkrolle (3) enthält.

12. Umlenkrollenanordnung nach einem der vorhergehenden Ansprüche, **dadurch gekennzeichnet, dass** die Frontplattenstruktur (4, 4', 4") eine Öffnung (14) enthält, durch welche das Ende (10) der Achse (2, 2', 2") sich zur zweiten Seite der Frontplattenstruktur (4, 4', 4") erstreckt, und dass die Kantenstruktur (13) der Öffnung (14) und/oder das zweite Verriegelungselement (17, 18) in die Positioniernut (8) der Achse (2, 2', 2") erstreckt, um eine Bewegung der Achse in der y-Richtung und/oder in der x-Richtung zu verhindern, vorzugsweise zumindest in der y-Richtung.

13. Umlenkrollenanordnung nach einem der vorhergehenden Ansprüche, **dadurch gekennzeichnet, dass** die in der Frontplattenstruktur gebildete Öffnung (14) so geformt ist, dass sie einen weiter umfassenderen Abschnitt (16) enthält, von welchem aus die Achse (2, 2', 2") durchgedrückt werden kann, und einen engeren Abschnitt (15), zu dessen Punkt die von der Öffnung (14) durchgedrückte Achse (2, 2', 2") von dem Punkt der mehr umfassenderen Öffnung (16) in Richtung der Rotationsebene der Achse bewegt werden kann, und dass wenn die Achse (2, 2', 2") sich am Punkt des engeren Abschnitts (15) der Frontplattenstruktur (4, 4', 4") befindet, sie sich in die Positoniervertiefung (8) der Achse (2) erstreckt und eine Bewegung der Achse (2) in axialer Richtung (y) verhindert.

14. Umlenkrollenanordnung nach einem der vorhergehenden Ansprüche, **dadurch gekennzeichnet, dass** das Verriegelungselement (5) direkt oder indirekt unbeweglich mit der Frontplattenstruktur (4, 4', 4") über einen Reißbolzen (21) und einen Bolzen (24) verbunden ist, wobei die Bruchschwelle des Reißbolzens (21) geringer ist als die des Bolzens (24).

15. Umlenkrollenanordnung nach einem der vorhergehenden Ansprüche, **dadurch gekennzeichnet, dass**, wenn der Reißbolzen (21) reißt/bricht, das Verriegelungselement (5) dazu konzipiert ist, von seiner Position gegen die Verriegelungsfläche (12) um den Drehpunkt (F) der an dem Punkt des Bolzens (24) gebildeten axialen Richtung (y) wegzubrechen.

16. Aufzug, insbesondere ein Personenaufzug, welcher eine Aufzugskabine enthält, eine Seilanordnung, die sich bewegt, wenn der Aufzug betrieben wird, wie zum Beispiel ein Hebeseil und/oder ein Kompensationsseil und eine Umlenkrollenanordnung (1), welche Umlenkrollenanordnung (1) wenigstens eine Umlenkrolle (3) enthält, die konzipiert ist, in dem Aufzughebeweg und/oder an der Aufzugskabine und/oder an dem Gegengewicht zu rotieren, welche Umlenkrolle konzipiert ist, die Passage des wenigstens einen in der vorgenannten Seilanordnung enthaltenen Seiles oder dergleichen zu führen, **dadurch gekennzeichnet, dass** die Umlenkrollenanordnung gemäß einem der Ansprüche 1 bis 10 ausgebildet ist.

## Revendications

1. Agencement de poulie de détour (1), plus particulièrement un agencement de poulie de détour d'un ascenseur, ledit agencement comprend :
- un axe (2, 2', 2"),
- au moins une poulie de détour (3) qui tourne tout en étant soutenue sur l'axe (2 2', 2"),
- une structure de plaque avant (4, 4', 4") sur le côté de la poulie de détour (3), par rapport à laquelle et supportée par laquelle la poulie de détour (3) est agencée pour tourner,
- un moyen de verrouillage (5, 5', 11, 12) supporté sur la structure de plaque avant (4, 4', 4") sur le côté de la poulie de détour pour verrouiller l'axe de telle manière qu'il ne tourne pas par rapport à la structure de plaque avant (4, 4', 4"), lequel agencement comprend également un moyen de positionnement (8, 13, 17, 18) supporté sur la structure de plaque avant (4, 4', 4") sur le côté de la poulie de détour (3) pour positionner l'axe (2, 2') par rapport à la structure de plaque avant (4, 4', 4") au moins dans la direction axiale (y),
**caractérisé par le fait que**
- l'élément de verrouillage (5, 5') est fixé immobile à la structure de plaque avant (4, 4', 4") par l'intermédiaire d'au moins une tige de rupture (21)
ou **par le fait que**
- l'élément de verrouillage (5') est fixé contre la surface de verrouillage (12) comprise dans l'axe (2, 2', 2") pour être immobile par rapport à la structure de plaque avant dans la direction axiale (y) en compressant l'élément de verrouillage contre la base de fixation, telle que la structure de plaque avant (4, 4', 4") ou une pièce (18) y étant fixée, avec des moyens de fixation et **par le fait qu'**il y a de la place pour le mouvement entre l'élément de verrouillage (5') et le moyen de fixation qui permet le mouvement de l'élément de verrouillage dans la direction radiale (x) au moins sur une certaine distance lorsque le verrouillage par frottement produit par compression échoue.

2. Agencement de poulie de détour (1) selon la revendication 1, **caractérisé par le fait que** les moyens de positionnement (8, 13, 17, 18) pour positionner l'axe (2, 2') empêchent l'axe (2) de se déplacer dans l'une ou l'autre direction axiale (y).

3. Agencement de poulie de détour (1) selon l'une quelconque des revendications précédentes, **caractérisé par le fait que** les dispositifs de verrouillage comprennent un élément de verrouillage (5, 5'), qui empêche la rotation de l'axe (2, 2', 2"), et les moyens de positionnement comprennent un second élément de verrouillage (13, 17, 18), qui empêche l'axe de se déplacer dans l'une ou l'autre direction axiale (y).

4. Agencement de poulie de détour (1) selon l'une quelconque des revendications précédentes, **caractérisé par le fait que** l'élément de verrouillage (5, 5') compris dans le moyen de verrouillage (5, 5', 11, 12) et/ou les moyens de positionnement (8, 13, 17, 18) pour positionner l'axe (2, 2', 2") empêchent également l'axe (2) de se déplacer dans la direction radiale (x).

5. Agencement de poulie de détour (1) selon l'une quelconque des revendications précédentes, **caractérisé par le fait que** l'élément de verrouillage (5, 5') est placé contre la surface de verrouillage (12) comprise dans l'axe (2, 2', 2") de telle manière que le point de contact (C) de l'élément de verrouillage et de la surface de verrouillage (12) de l'axe soit au moins partiellement visible.

6. Poulie de détour selon l'une quelconque des revendications précédentes, **caractérisée par le fait que** les moyens de positionnement (8, 13, 17, 18) pour positionner l'axe (2, 2', 2") dans la direction axiale (y) par rapport à la structure de face avant (4, 4', 4") comprennent un second élément de verrouillage (13, 17, 18) qui est immobile par rapport à la structure de plaque avant (4, 4', 4") et qui s'étend dans l'évidement de positionnement (8) dans l'axe (2, 2', 2"), lequel évidement de positionnement est préférentiellement une rainure de positionnement (8) le contournant, lequel second élément de verrouillage est préférentiellement une pièce fixée à la structure de plaque avant (4, 4', 4") ou une structure périphérique de la structure de plaque avant (4, 4', 4").

7. Agencement de poulie de détour selon l'une quelconque des revendications précédentes, **caractérisé par le fait que** les dispositifs de verrouillage comprennent un élément de verrouillage (5, 5'), qui est placé contre la surface de verrouillage (12) comprise dans l'axe (2, 2', 2") de telle manière qu'il empêche la rotation de l'axe (2, 2', 2").

8. Agencement de poulie de détour (1) selon l'une quelconque des revendications précédentes, **caractérisé par le fait que** la poulie de détour (3) est agencée afin de tourner sur le premier côté de la structure de plaque avant (4, 4', 4"), et **par le fait que** les moyens de verrouillage (5, 5', 11, 12) mentionnés précédemment comprennent un élément de verrouillage (5, 5') supporté sur le second côté de la structure de plaque avant (4, 4', 4") de manière immobile par rapport à la structure de plaque avant (4, 4', 4"), à l'aide duquel l'axe (2, 2', 2") est verrouillé de telle manière qu'il ne tourne pas par rapport à la structure de plaque avant (4, 4', 4").

9. Agencement de poulie de détour (1) selon l'une quelconque des revendications précédentes, **caractérisé par le fait que** l'axe (2, 2', 2") comprend une indentation de verrouillage (11) à son extrémité (10) qui s'étend jusqu'au second côté de la structure de plaque avant (4, 4', 4"), dans laquelle indentation de verrouillage (11) l'élément de verrouillage (5, 5') mentionné précédemment qui reste fixe par rapport à la structure de plaque avant (4, 4', 4") est placé pour empêcher la rotation de l'axe (2, 2', 2"), et **par le fait que** l'indentation de verrouillage (11) s'ouvre autant dans la direction longitudinale (y) que dans la direction transversale (x) de l'axe (2), et **par le fait que** la surface de verrouillage (12) de l'indentation (11), qui est orientée vers la direction transversale (x) de l'axe (2, 2'), forme une surface de détente pour l'élément de verrouillage (5, 5') pour empêcher la rotation de l'axe (2, 2', 2").

10. Agencement de poulie de détour selon l'une quelconque des revendications précédentes, **caractérisé par le fait que** l'élément de verrouillage (5, 5) et le second élément de verrouillage (18) sont des pièces différentes.

11. Agencement de poulie de détour selon l'une quelconque des revendications précédentes, **caractérisé par le fait que** l'agencement de poulie de détour (1) comprend un palier entre l'axe (2, 2', 2") et la poulie de détour (3).

12. Agencement de poulie de détour selon l'une quelconque des revendications précédentes, **caractérisé par le fait que** la structure de plaque avant (4, 4', 4") comprend une ouverture (14) à travers laquelle l'extrémité (10) de l'axe (2, 2', 2") s'étend jusqu'au second côté de la structure de plaque avant (4, 4', 4"), et **par le fait que** la structure périphérique (13) de l'ouverture (14) et/ou le second élément de verrouillage (17, 18) s'étend dans la rainure de positionnement (8) de l'axe (2, 2', 2"), pour empêcher le mouvement de l'axe dans la direction y et/ou la direction x, préférentiellement au moins dans la direction y.

13. Agencement de poulie de détour selon l'une quelconque des revendications précédentes, **caractérisé par le fait que** l'ouverture (14) comprise dans la structure de plaque avant est formée pour comprendre une section plus vaste (16), à partir de laquelle l'axe (2, 2', 2") peut être passée, et une section plus étroite (15), jusqu'au point où l'axe (2, 2', 2") passé depuis l'ouverture (14) peut être déplacé dans la direction du plan de rotation de l'axe depuis le point d'ouverture le plus vaste (16), et lorsque l'axe (2, 2', 2") est au niveau du point de la section plus étroite (15) la structure de plaque avant (4, 4', 4") s'étend dans l'évidement de positionnement (8) de l'axe (2) et empêche le mouvement de l'axe (2) dans la direction axiale (y).

14. Agencement de poulie de détour selon l'une quelconque des revendications précédentes, **caractérisé par le fait que** l'élément de verrouillage (5) est directement ou indirectement fixé immobile à la structure de plaque avant (4, 4', 4") par l'intermédiaire d'une tige de rupture (21) et d'un boulon (24), le seuil de rupture de laquelle tige de rupture (21) est inférieur à celui du boulon (24).

15. Agencement de poulie de détour selon l'une quelconque des revendications précédentes, **caractérisé par le fait que**, lorsque la tige de rupture (21) casse, l'élément de verrouillage (5) est agencé pour s'écarter de sa position contre la surface de verrouillage (12) autour du pivot (F) de la direction axiale (y) formée au niveau du point du boulon (24).

16. Ascenseur, plus particulièrement un ascenseur pour passagers, qui comprend un câblage de cabine d'ascenseur, qui se déplace lorsque l'ascenseur est actionné, tel que par exemple un câblage de levage et/ou un câblage de compensation, et un agencement de poulie de détour (1), lequel agencement de poulie de détour (1) comprend au moins une poulie de détour (3) agencée pour tourner dans le puits d'ascenseur et/ou sur la cabine d'ascenseur et/ou sur le contrepoids, laquelle poulie de détour est agencée pour guider le passage d'au moins un câble ou correspondant compris dans le câblage mentionné précédemment, **caractérisé par le fait que** l'agencement de poulie de détour est conforme à l'une quelconque des revendications 1 à 10.
